(19) **Europäisches Patentamt / European Patent Office / Office européen des brevets**

(11) **EP 2 074 736 B1**

(12) **EUROPEAN PATENT SPECIFICATION**

(45) Date of publication and mention of the grant of the patent:
**02.04.2014 Bulletin 2014/14**

(21) Application number: **07808449.8**

(22) Date of filing: **21.09.2007**

(51) Int Cl.:
**H04L 7/04** *(2006.01)*    **H04L 27/26** *(2006.01)*

(86) International application number:
**PCT/KR2007/004687**

(87) International publication number:
**WO 2008/038986 (03.04.2008 Gazette 2008/14)**

(54) **APPARATUS AND METHOD OF SYNCHRONIZING FRAMES USING PHASE DIFFERENTIAL INFORMATION IN DVB TRANSMISSION SYSTEM**

VORRICHTUNG UND VERFAHREN ZUM SYNCHRONISIEREN VON RAHMEN DURCH VERWENDUNG VON PHASENDIFFERENZINFORMATIONEN IN EINEM DVB-ÜBERTRAGUNGSSYSTEM

APPAREIL ET PROCÉDÉ DE SYNCHRONISATION UTILISANT UNE INFORMATION DE DIFFÉRENTIEL DE PHASE DANS UN SYSTÈME DE TRANSMISSION DVB

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 KR 20060096273**

(43) Date of publication of application:
**01.07.2009 Bulletin 2009/27**

(73) Proprietor: **Electronics and Telecommunications Research Institute**
**Yuseong-gu**
**Daejon 305-350 (KR)**

(72) Inventors:
• **KIM, Pan-Soo**
  **Daejon 302-804 (KR)**
• **KIM, Tae-Hoon**
  **Seoul 158-805 (KR)**
• **LEE, In-Ki**
  **Busan 607-061 (KR)**
• **CHANG, Dae-Ig**
  **Daejon 302-280 (KR)**
• **OH, Deock-Gil**
  **Daejon 302-120 (KR)**
• **CORAZZA, Giovanni E.**
  **40137 Bologna (IT)**
• **PEDONE, Raffaella**
  **40139 Bologna (IT)**
• **VILLANTI, Marco**
  **40136 Bologna (IT)**

(74) Representative: **Betten & Resch**
**Theatinerstrasse 8**
**80333 München (DE)**

(56) References cited:
**WO-A1-2005/006759    WO-A1-2005/020576**
**US-A1- 2004 252 229**

• **ALBERTO GINESI: "DVBS2: Frame Synchronisation Analysis", EUROPEAN SPACE AGENCY (ESA), 16 June 2003 (2003-06-16), XP040410260, Rijswijk, Netherlands**
• **ALBERTO MORELLO & VITTORIA MIGNONE: "DVB-S2: The Second Generation Standard for Satellite Broad-band Services", PROCEEDINGS OF THE IEEE, IEEE. NEW YORK, US, vol. 94, no. 1, 1 January 2006 (2006-01-01), pages 210-227, XP007912733, ISSN: 0018-9219, DOI: DOI: 10.1109/JPROC.2005.861013 [retrieved on 2006-01-03]**
• **SUN F-W ET AL: "FRAME SYNCHRONIZATION AND PILOT STRUCTURE FOR SECOND GENERATION DVB VIA SATELLITES", INTERNATIONAL JOURNAL OF SATELLITE COMMUNICATIONS, JOHN WILEY AND SONS, US, vol. 22, no. 3, 1 January 2004 (2004-01-01), pages 319-339, XP008036682, ISSN: 0737-2884, DOI: DOI:10.1002/SAT.793**

**(Cont. next page)**

- ALBERTAZZI G ET AL: "On the adaptive DVB-S2 physical layer: design and performance", IEEE WIRELESS COMMUNICATIONS, IEEE SERVICE CENTER, PISCATAWAY, NJ, US, vol. 12, no. 6, 1 December 2005 (2005-12-01), pages 62-68, XP001512870, ISSN: 1536-1284, DOI: DOI: 10.1109/MWC.2005.1561946

- "Digital Video Broadcasting (DVB) User guidelines for the second generation system for Broadcasting, Interactive Services, News Gathering and other broadband satellite applications (DVB-S2); ETSI TR 102 376", ETSI STANDARDS, LIS, SOPHIA ANTIPOLIS CEDEX, FRANCE, vol. BC, no. V1.1.1, 1 February 2005 (2005-02-01), XP014027139, ISSN: 0000-0001

## Description

### Technical Field

The present invention relates to an apparatus and method for frame synchronization using phase differential information in a digital video broadcasting (DVB) transmission system; and, more particularly, to an apparatus and method for frame synchronization using phase differential information in a DVB transmission system, which can overcome a low signal-to-noise ratio (SNR) and a large frequency offset and reliably acquire frame synchronization at high speed by performing frame synchronization through correlation diagram analysis using phase differential information as much as the length of a start of frame (SOF) symbol duration in an initial synchronization process and which can further improve the reliability of estimation by additionally performing a correlation detecting process using a pilot symbol in a tracing process.

### Background Art

The development of channel coding technologies such as low density party check makes it possible to embody a transmission system that satisfies a low bit error rate even in a poor channel environment having a low signal-to-noise ratio (SNR). Such a transmission system provides high transfer rate and high quality communication. For example, a digital video broadcasting satellite second generation (DVB-S2) system, the next generation satellite communication/broadcasting system, is a high performance transmission system that considers a signal-to-noise ratio (SNR) up to ES/N0 = - 2.35dB, and has a packet error rate (PER) of about $10^{-7}$.

A satellite communication system uses a radio frequency (RF) carrier for satellite transmission. Since the RF carrier frequency thereof is about several tens GHz, the satellite communication system has comparatively larger frequency offset against a bandwidth than other communication systems. Doppler frequency offset is also greatly generated in a high speed moving object environment such as a bullet train or an air plane. For example, it is expected that the DVB-S2 system may have about -5MHz to +5MHz of frequency offset. That is, in case of about 25Msps of a symbol speed, the DVB-S2 system may have about 20% of frequency offset.

The DVB-S2 system has a limitation to provide a desired performance if a conventional frame synchronization method is used due to the performance deterioration factors of a satellite communication and broadcasting system channel. For example, although the DVB-S2 system can provide a wideband high quality service even in a low SNR environment by employing a low density parity check (LDPC) code, the DVB-S2 system still has a limitation to provide a desired performance for frame synchronization matched with a high quality service due to the low SNR and the large frequency offset of a satellite channel.

In order to overcome the limitations, a differential post detection integration (DPDI) scheme was introduced in an article by F. W. Sun, Y. Jiang and L. N. Lee, entitled "Frame Synchronization and Pilot Structure for Second Generation DVB via Satellite" in Int. J. Satell. Commun. Network, vol.22, pp. 319-339, May/June 2004. The DPDI scheme performs comparison and decision based on the accumulation of 25 correlations through phase differential information between start of frame (SOF) symbol sequences of adjacent symbol, where the SOF symbol is a start point of a frame in the DVB-S2 frame structure. However, the DPDI scheme disadvantageously takes a lot of time for frame synchronization and low reliability although the DPDI scheme has generally employed in a typical transmission structure having a frequency offset.

As for another conventional method for frame synchronization, a Choi and Lee's detector (CLD) scheme was introduced in an article by Z.Y. Choi, and Y.H. Lee, entitled "Frame Synchronization in the Presence of Frequency Offset" in IEEE Trans on Commu., vol. 50, n. 7, July 2002, pp. 1062-1065. The CLD scheme introduced a detector strong for frequency offset as a maximum likelihood type. The CLD scheme detects all of differences as long as the SOF duration for known frame symbols for synchronization signal in an environment having a large carrier frequency offset, and calculates the average of the detected differences, thereby providing the high reliability to perform frame synchronization. However, the CLD scheme requires a lot of multiplications for accurate calculation. Therefore, it is difficult to embody the CLD scheme in hardware for a real receiver.

As for yet another conventional method for frame synchronization, a generalized post detection integration (GPDI) scheme was introduced in an article by G.E. Corazza, and R. Pedone, entitled "Generalized and Average Post Detection Integration Methods for Code Acquisition" in IEEE International Symposium on Spread Spectrum Techniques and Applications (ISSSTA04), Sydney, Australia, Aug. 30 through Sept. 2, 2004 (refer to Equation 3). A decision variable AGPDI calculated by the GPDI scheme is the sum of a non-coherent post detection integration (PDI) decision variable ANCPDI and two times of n-span differential post detection integration (DPDI) decision variable AN-DPDI.

The DPDI scheme is not greatly influenced by asynchronous calculation if frequency offset is comparatively small. However, the performance of the GPDI scheme becomes degraded by the asynchronous calculation in an environment having a comparatively large frequency offset and a low SNR.

As described above, the DPDI scheme has a problem of a long frame synchronization time although the DPDI scheme is generally employed in typical transmission structures having the frequency offset. The CLD scheme also has a difficulty to embody in hardware due to the large number of multiplications although the CLD scheme has the good frame synchronization performance even in an environment having a frequency offset. The GPDI scheme has a problem of the performance degradation in an environment having a large frequency offset although the GPDI scheme provides the improved performance for frame synchronization.

Document "DVBS2: Frame Synchronization Analysis" prepared by the European Space Agency (ESA) ESTEC European Space and Technology Centre, discloses the methods of acquisition of payload framing for the DVB-S2 signal structure. The principle of start of frame (SOF) acquisition processing for constant Frame length is introduced and its further extensions are provided to achieve a small false alarm probability in order to reduce the mean acquisition time.

Document "DVB-S2: The Second Generation Standard for Satellite Broad-band Services", A. Morello and V. Mignone, Proceedings of the IEEE, vol. 94, NO. 1, January 2006, discloses a tutorial overview of the DVB-S2 system, describing its main features and performance in various scenarios and applications.

**Disclosure of Invention**

**Technical Problem**

An embodiment of the present invention is directed to providing an apparatus and method for frame synchronization using phase differential information in a DVB transmission system, which can overcome a low signal-to-noise ratio (SNR) and a large frequency offset and reliably acquire frame synchronization at high speed by performing frame synchronization through correlation diagram analysis using phase differential information as much as the length of a start of frame (SOF) symbol duration in an initial synchronization process and which can further improve the re liability of estimation by additionally performing a correlation detecting process using a pilot symbol in a tracing process.

Other objects and advantages of the present invention can be understood by the following description, and become apparent with reference to the embodiment of the present invention. Also, it is obvious to those skilled in the art of the present invention that the objects and advantages of the present invention can be realized by the means as claimed and combinations thereof.

**Technical Solution**

The present invention is defined in the independent claims. The dependent claims define advantageous embodiments thereof.

In accordance with an aspect of the present indention, there is provided an apparatus for frame synchronization using phase differential information in a digital video broadcasting (DVB) transmission system, including: a first correlator for calculating a First decision variable as correlation using phase differential information between a received symbol data sequence and start of flame (SOF) symbol sequences for frame synchronization in a SOF symbol duration a first comparator for comparing the first decision variable with a predetermined first threshold value: and an acquisition controller for determining whether initial frame synchronization is achieved or not according to the comparison result of the first comparator and controlling the first correlator to continuously operate until the initial frame synchronization is achieved.

The apparatus may further include: a second correlator for calculating a second decision variable as correlation using phase differential information between a received symbol data sequence and a plurality of pilot symbols if the acquisition controlling means determines that the initial frame synchronization is achieved; a second comparator for comparing the second decision variable with a second threshold value; and a frame data obtaining unit for obtaining information about a modulation type, a frame type, and pilot existence from structural information of the obtained transmission frame through the initial frame synchronization if the initial frame synchronization is achieved in the first comparator.

In accordance with another aspect of the present invention, there is provided a method for frame synchronization using phase differential information in a digital video broadcasting (DVB) transmission system, including the steps of: a) calculating a first decision variable as correlation using phase differential information between a received symbol data sequence and start of frame (SOF) symbol sequences for frame synchronization in a SOF symbol duration; and b) determining whether initial frame synchronization is achieved or not by comparing the first decision variable with a predetermined first threshold value.

The method may further include the steps of: c) calculating a second decision variable as correlation using phase differential information between a received symbol data sequence and a plurality of pilot symbols if it is determined that the initial frame synchronization is achieved at the step a); d) determining whether frame synchronization is sustained or not by comparing the second decision variable with a second threshold value, and feeding the determination result back to the step a); and e) obtaining information about a modulation type, a frame type, and pilot existence from structural information of the obtained transmission frame through the initial frame synchronization if the initial frame synchronization is achieved at step b).

In order to properly perform a communication operation in a digital transmission system, a receiving end essentially needs a frame synchronization technology that detects a start of frame (SOF). The performance of frame synchronization, which is performed right after symbol synchronization in an initial synchronization mode, is generally a major parameter for obtaining a desired overall performance of a system.

Therefore, the apparatus and method for frame synchronization using differential information according to an embodiment of the present invention enables a satellite communication/broadcasting system to acquire frame synchronization at high speed although the satellite communication/broadcasting system has a low SNR and a great frequency offset. That is, the present invention introduces a correlator structure to overcome a low SNR environment and a great frequency offset when a DVB-S2 satellite communication/broadcasting system performs frame synchronization. Also, the present invention introduces a method of obtaining information about a modulation scheme, a frame type or a frame length, and pilot existence by obtaining frame synchronization. Furthermore, the present invention introduces a frame synchronization method using a pilot if the pilot exists.

**Advantageous Effects**

An apparatus and method for frame synchronization using differential information according to an embodiment of the present invention can obtain a frame synchronization estimation value with high reliability in a satellite transmission system that operates in an environment having a low signal-to-noise ratio (SNR) and a large frequency offset. Therefore, the apparatus and method for frame synchronization according to an embodiment of the present invention can provide a frame synchronization scheme that satisfies a high quality service. That is, the apparatus and method for frame synchronization according to an embodiment of the present invention can overcome a low signal-to-noise ratio (SNR) and a large frequency offset and can perform reliable frame synchronization at high speed.

The apparatus and method for frame synchronization according to an embodiment of the present invention can improve the reliability of frame synchronization estimation by performing a hard combining operation for pilot symbol sequences in a tracking step after the frame synchronization is acquired through hot start detection and cold start detection.

The apparatus and method for frame synchronization according to an embodiment of the present invention can obtain information about a modulation type, a frame type or a frame length, and pilot existence in an initial synchronization mode before physical layer signaling (PLS) decoding.

**Brief Description of the Drawings**

Fig. 1 illustrates a DVB-S2 transmission frame where the present invention is applied to.

Fig. 2 is a block diagram illustrating an apparatus for frame synchronization using differential information in a DVB transmission system in accordance with an embodiment of the present invention.

Fig. 3 is a block diagram illustrating a cold start detector or a hot start detector of Fig. 2 in accordance with an embodiment of the present invention.

Fig. 4 is a state diagram for frame synchronization in accordance with an embodiment of the present invention.

Fig. 5 is a graph for comparing the performances of correlators of different frame synchronization types.

Fig. 6 is a graph comparing mean acquisition times of correlators of different frame synchronization types.

Fig. 7 is a graph showing the accuracies of frame synchronization according to the number of pilot symbols in a hot start state in accordance with an embodiment of the present invention.

Fig. 8 is a graph for comparing mean acquisition times according to various Es/No by a penalty time.

Fig. 9 is a diagram for describing a method of obtaining information about a modulation type, pilot existence, and a frame type through a frame symbol length after frame synchronization in accordance with an embodiment of the present invention.

Fig. 10 is a table for describing relations between a frame symbol length and a transmission frame structure, which are applied to the present invention.

Fig. 11 is a flowchart for a method of obtaining frame data, which is applied to a frame data obtaining unit of Fig. 2, in accordance with an embodiment of the present invention.

**Best Mode for Carrying Out the Invention**

The advantages, features and aspects of the invention will become apparent from the following description of the embodiments with reference to the accompanying drawings, which is set forth hereinafter. When it is considered that detailed description on a related art may obscure the points of the present invention, the description will not be provided herein. Hereinafter, specific embodiments of the present invention will be described in detail with reference to the accompanying drawings.

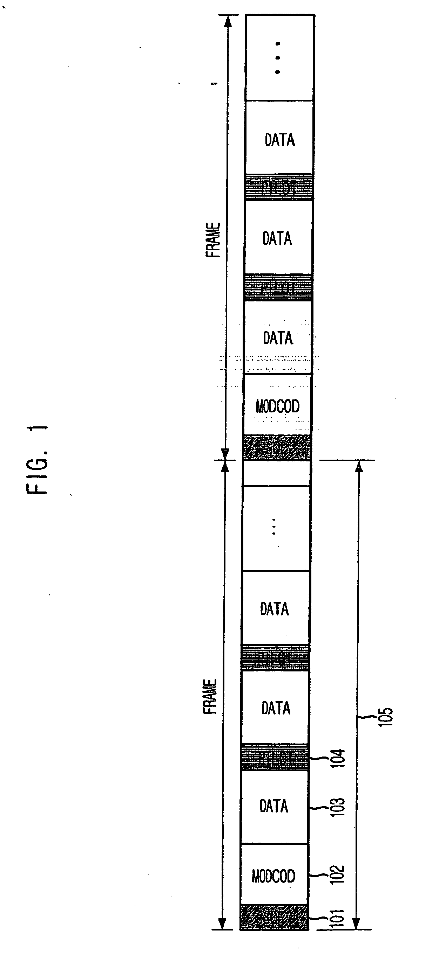

Fig. 1 is a diagram illustrating a transmission frame of a digital video broadcasting satellite second generation (DVB-S2) where the present invention is applied to.

Referring to Fig. 1, the DVB-S2 transmission frame includes a SOF block 101, a MODCOD block 102, a DATA block 103, and a PILOT block 104. The start of frame (SOF) block indicates a start point of a frame and is used for frame synchronization in a DVB-S2 standard. The SOF block is constituted of 26 symbols in a predetermined bit pattern.

The MODCOD block is constituted of 7-bits. The MODCOD block includes 5-bits of modulation and code rate information, 1-bit of frame length information, and 1-bit of pilot existence information. The MODCOD block is constituted of total 64 symbols, which is generated by performing (32,6) Reed Muller coding, repeating and reversing the coding result with the last 1-bit indicating the pilot existence and performing a $\pi/2$ BPSK modulation.

The DATA block 103 is constituted of 16 slots, and each of 16 slots includes 90 symbols. That is, the DATA block 103 is constituted of total 1440 symbols.

The PILOT block 104 includes information about 36 pilot data.

The length of a frame structure is decided according to a modulation type. The lengths of the blocks shown in Fig. 1 are only examples for clearly describing the present invention. The present invention is not limited to the length of the DVB-S2 transmission frame.

That is, it is possible to apply the present invention in any frame structures although a data length, a pilot length, or a duration is shortened.

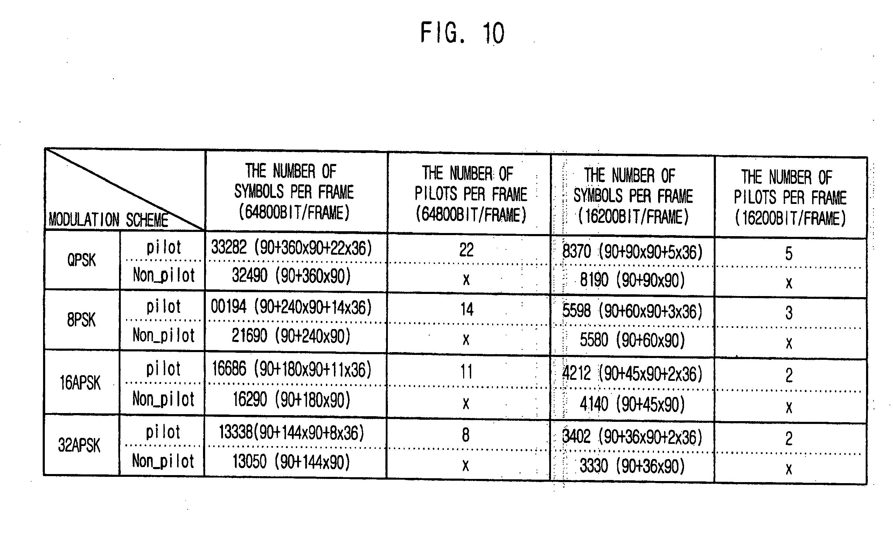

The length 105 of one frame is decided according to a modulation type, pilot existence, the number of data bits. Table in Fig. 10 clearly describes relations between a frame length and a transmission frame structure.

In the apparatus and method for frame synchronization according to the present embodiment, a receiving end can detect a point having good correlation characteristics as a start point of frame synchronization by correlating inputted DVB-S2 transmission data with the SOF block 101. due to DVB-S2 transmission data inputted with the SOF block 101.

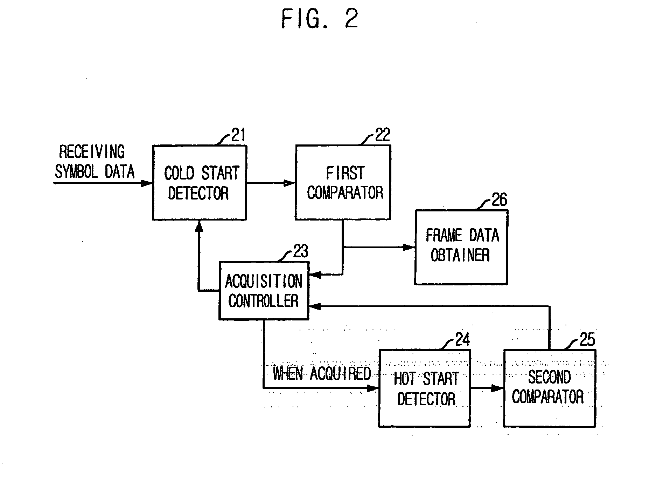

Fig. 2 is a block diagram illustrating an apparatus for frame synchronization using differential information in a DVB transmission system in accordance with an embodiment of the present invention.

The frame synchronization apparatus according to the present embodiment is a two-stage frame synchronization apparatus for a frame having a DVB-S2 frame structure shown in Fig. 1.

In order to overcome the frequency offset in an initial synchronization process, the frame synchronization apparatus according to the present embodiment performs correlation diagram analysis using phase differential information such as amount of phase rotation as much as a SOF symbol duration from a start symbol of the SOF block to the 26th symbol therefrom. Then, the frame synchronization apparatus according to the present embodiment additionally performs a method of utilizing a pilot symbol in correlation detection in order to improve the reliability of estimation.

As shown in Fig. 2, the frame synchronization apparatus according to the present embodiment includes a cold start detector 21, a first comparator 22, an acquisition controller 23, a hot start detector 24, a second comparator 25, and a frame data obtainer 26.

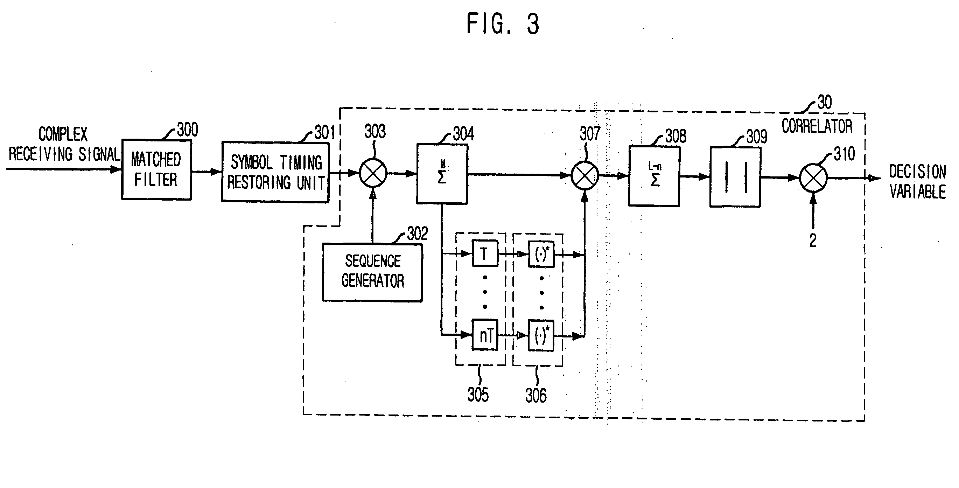

The cold start detector 21 is a correlator. The cold start detector 21 performs a correlation operation on a receiving symbol data sequence with a SOF coefficient value, a conjugate complex number, which is stored in a memory of a sequence generator 302 of Fig. 3. Cold start means an initial stage where received data is not completely demodulated.

The first comparator 22 compares the output value of the cold start detector 21, which is a decision variable, with a first threshold value which is stored in a register of a receiving end. The first comparator 22 transmits the comparison result to the acquisition controller 23.

The acquisition controller 23 confirms the comparison result of the first comparator 22. If the decision variable outputted from the cold start detector 21 is smaller than the first threshold value, the acquisition controller 23 continuously controls the cold start detector 21 to operate. If the decision variable of the cold start detector 21 is larger than the first threshold value, the acquisition controller 23 determines that the start of a frame is acquired. Then, the acquisition controller 23 controls the hot start detector 24 to operate.

Then, the hot start detector 24 performs a correlation operation on the location of a pilot like the PILOT block 104 in Fig. 1 because the start point (SOF) of a frame is already decided, temporally by the acquisition controller 23. The hot start detector 24 is also a correlator.

The second comparator 25 compares the output value, the decision variable, of the hot start detector 24 with a second threshold value and transmits the comparison result to the acquisition controller 23. The second threshold value is larger than the first threshold value.

Then, the acquisition controller 23 finally determines whether the frame synchronization is archived or not according to the comparison result. If the frame synchronization is not archived, the initial frame synchronization is performed again by operating the cold start detector 21.

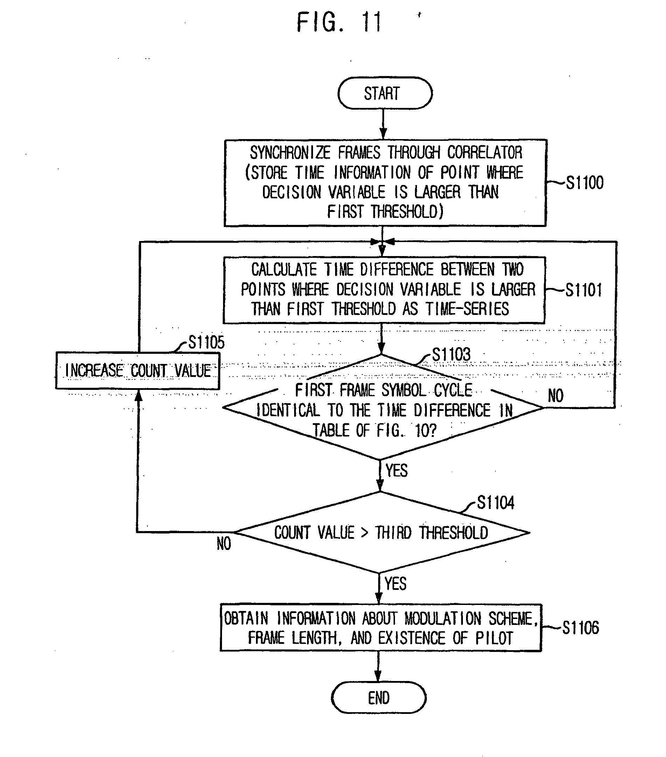

The frame data obtainer 26 obtains information about a modulation type, pilot existence, and a frame type or a frame length based on the frame symbol length after it is confirmed that the frame synchronization is archived through the first comparator 22. It will be described in detail with reference to Fig. 11 in later.

Fig. 3 is a block diagram illustrating a cold start detector or a hot start detector of Fig. 2 in accordance with an embodiment of the present invention.

That is, Fig. 3 shows a correlator 30 used as the cold start detector 21 and the hot start detector 24 in Fig. 2. As described above, the cold start detector 21 performs a correlation operation on a receiving symbol data sequence with a SOF symbol sequence. The hot start detector 21 performs a correlation operation on a receiving symbol data sequence with a pilot symbol sequence. Therefore, L in an accumulator 30 denotes the length of SOF block (LSOF) in case of the cold start detector 21. In case of the hot start detector 21, L in the accumulator 308 denotes the length of a PILOT block. A sequence generated by a sequence generator 302 denotes a coefficient value constituted of SOF symbol sequences in case of the cold start detector 21. Also, the sequence denotes a coefficient value constituted of pilot symbol sequences in case of the hot start detector 24.

Referring to Fig. 3, the correlator 30 is sequentially connected to a matched filter 300 and a symbol timing restoring unit 301. After a complex receiving signal passes through the matched filter 300, the symbol timing restoring unit 301 synchronizes symbol timing. Then, the symbol timing restoring unit 301 outputs the complex receiving signal to the cold start detector 21 as a form of a receiving symbol data sequence, which is the correlator 30. The symbol timing restoring unit 301 estimates symbol timing synchronization of the receiving signal from the matched filter 300 and samples the receiving signal using the estimated timing.

As shown in Fig. 3, the correlator 30 includes a sequence generator 302, a first multiplier 303, a first accumulator 304, a symbol delay 305, a conjugate complex number generator 306, a second multiplier 307, a second accumulator 308, an absolute value calculator 309, and a third multiplier 310.

In case of the cold start detector, the first multiplier 303 multiplies the sampled symbol data sequence outputted from the symbol timing restoring unit 301 with a SOF symbol sequence outputted from the sequence generator 302. Or, in case of the hot start detector, the first multiplier 303 multiples the sampled symbol data sequence with a coefficient value formed of pilot symbol sequence. Then, the first accumulator 304 accumulates the multiplying results as much as a length M. The length M is decided by an operator according to a channel environment. The length M is a parameter value stored in a CPU register of a demodulator. Generally, an operator decreases the M value if the frequency offset is large, and increases the M value if the frequency offset is small.

In the symbol delay 305, n denotes the number of symbols to be delayed, and T denotes the duration of one symbol. The conjugate complex number generator 306 generates a conjugate complex number for the delayed symbol outputted from the symbol delay unit 305.

Then, the second multiplier 307 calculates complex correlation by multiplying the delayed and conjugate complex symbol from the symbol delay 305 and the conjugate complex unit 306 with the accumulated symbol from the first accumulator 304.

The second accumulator 308 accumulates the multiplying results as much as the differences between the number of symbols n and the SOF length ($L_{SOF}$) or the pilot length, (L-n), and the absolute value calculator 309 calculates an absolute value of the output from the second accumulator 308. The third multiplier 310 increases the absolute value by two, and the result thereof becomes a decision variable inputted to the first comparator 22 or the second comparator 25.

Hereinafter, the function of the correlator 30 will be described in detail.

Equations 1 and 2 are the equations of a CLD scheme for calculating a decision variable. Equation 3 is an equation of a GPDI scheme for calculating a decision variable ($\Lambda^{GPDI}$) which is the sum of a Non-Coherent PDI decision variable and two times of n-span DPDI decision variable ($\Lambda^{n-DPDI}$).

As described above, although the GPDI scheme like Equation 3 is not greatly influenced by asynchronous calculation if frequency offset is comparatively small, the performance of the GPDI scheme becomes degraded by the asynchronous calculation in an environment having a comparatively large frequency offset and a low SNR. In order to overcome such a shortcoming of the GPDI, a differential generalized post detection integration (DGPDI) scheme is introduced by excluding an asynchronous calculation part $\Lambda^{NCPDI}$ from Equation 3 in the present embodiment.

A signal detector for detecting frame synchronization according to the present embodiment can be expressed as Equation 5. In case of Equation 6, M becomes 1 if the frequency offset is large, rm denotes a complex receiving signal, and cm is a SOF signal of complex signal known at a receiving end.

Eq. 1

$$\Lambda^{CLD-L0} = \sum_{i=1}^{L_{SOF}-1} \left\{ \left| \sum_{k=i}^{L_{SOF}-1} r_k^* c_k r_{k-i} c_{k-i}^* \right|^2 - \sum_{k=i}^{L_{SOF}-1} |r_k|^2 |r_{k-i}|^2 \right\}$$

Eq. 2

$$\Lambda^{CLD-L1} = \sum_{i=1}^{L_{SOF}-1} \left\{ \left| \sum_{k=i}^{L_{SOF}-1} r_k^* c_k r_{k-i} c_{k-i}^* \right| - \sum_{k=i}^{L_{SOF}-1} |r_k| |r_{k-i}| \right\}$$

Eq. 3

$$\Lambda^{GPDI} = \Lambda^{NCPDI} + 2 \sum_{n=1}^{L-1} \Lambda^{n-DPDI}$$

Eq. 4

$$\Lambda^{n-Span\,DPDI} = \left| \sum_{i=n}^{L-1} x_i x_{i-n}^* \right|$$

Eq. 5

$$\Lambda^{DGPDI} = 2 \sum_{n=1}^{L-1} \Lambda^{n-spanDPDI}$$

Eq. 6

$$x_k = \sum_{m=kM}^{(k+1)M-1} r_m c_m^*$$

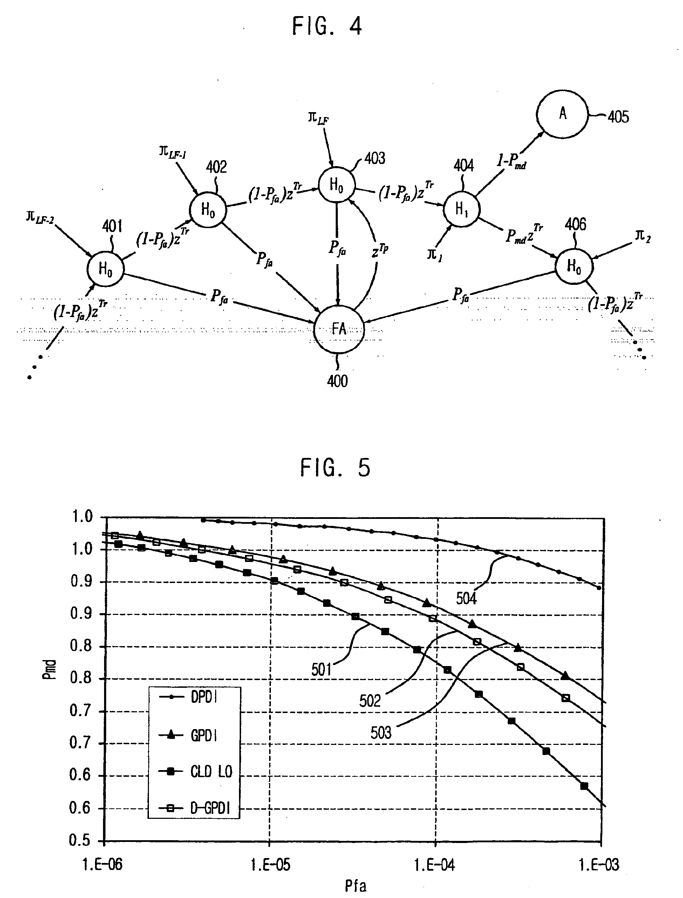

Equations 7 to 10 are equations for calculating the number N of multiplications m which are performed according to a SOF length in different types of signal detectors. Equation 7 is an equation for calculating the number of multiplications performed in a DPDI scheme which performs the smallest number of multiplications. However, the performance thereof is the worst as shown in Figs. 5 to 8.

Although the CLD scheme provides the best performance, the CLD scheme needs the largest number of multiplications as shown in Equation 10.

Eq. 7

$$N_m^{DPDI} = 2(2L_{SOF} + 1)$$

Eq. 8

$$N_m^{GPDI} = 2(L_{SOF}^2 + L_{SOF} + 1)$$

Eq. 9

$$N_m^{D-GPDI} = 2(L_{SOF}^2 + 1)$$

Eq. 10

$$N_m^{CLD} = \frac{5L_{SOF}^2 + 7L_{SOF}}{2}$$

Equation 9 is an equation for calculating the number of multiplications performed in the DGPDI scheme according to the present embodiment. As shown in Equation 9, the DGPDI scheme according to the present embodiment reduces the number of multiplications by about 1/4 while the DGPDI scheme according to the present embodiment improves the performance more than the typical DPDI scheme of Equation 7 and provides a predetermined level of false alarm probability (Pfa), which is lower than the conventional CLD scheme.

Fig. 4 is a state diagram for frame synchronization in accordance with an embodiment of the present invention.

The state diagram for frame synchronization according to the present embodiment includes a false alarm (FA) state 400, a hypothesis ($H_1$) state 404, an acquisition (A) state 405, and a hypothesis ($H_0$) state 406.

The FA state 400 denotes a false alarm probability. The FA state 400 is a state of falsely determining that frame synchronization is acquired although the frame synchronization is not acquired. The $H_1$ state 404 is a state assuming that frame synchronization is acquired. The A state 405 is a state that detects that the frame synchronization is successfully acquired through cold start detection. The H0 state 406 is a state that detects that the frame synchronization is not acquired through hot start detection after it is assumed that the frame synchronization is acquired.

Firstly, it is determined whether the frame synchronization is acquired or not through the cold start detection. Until the frame synchronization is acquired, the states 401, 402, and 403 are repeatedly performed.

After the frame synchronization is acquired at the state 404, it is determined whether the frame synchronization is sustained or not. If the frame synchronization is not sustained, the cold start detection is performed again in the state 406.

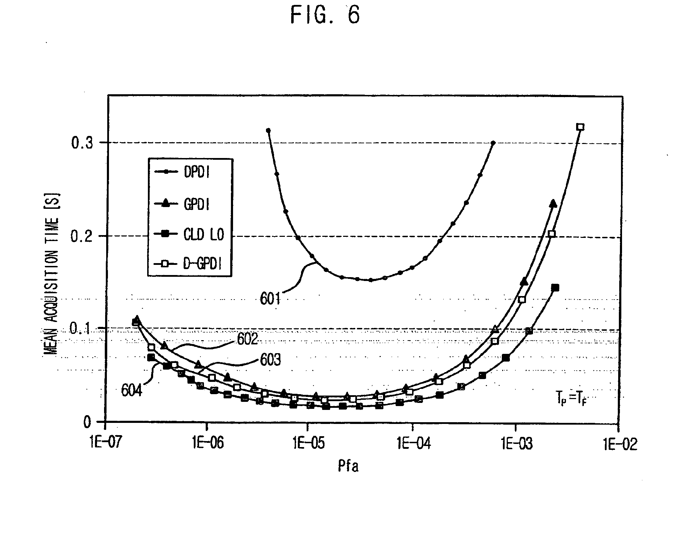

An average acquisition time shown in Fig. 6 can be induced through the state diagram for the frame synchronization.

Fig. 5 is a graph for comparing the performances of correlators of different frame synchronization types. In Fig. 5, the graph shows receiver of characteristics (ROC) curves that denotes a false alarm probability (Pfa) versus a frame synchronization miss probability (Pmd) according to types of correlators. The curve 501 denotes ROC for a CLD L0 scheme, the ROC curve 502 denotes ROC for a D-GPDI scheme according to an embodiment of the present invention. The curve 503 denotes ROC for a GPDI scheme, and the curve 504 denotes ROC for a DPDI scheme.

The lower the false alarm probability (Pfa) is and the lower the frame synchronization miss probability (Pmd) is, the higher the performance of frame synchronization becomes. As shown, the ROC curves 502, 503, and 504 clearly show that the frame synchronization performance of the D-GPDI scheme according to the present embodiment is much better than the conventional DPDI and GPDI schemes. Although the ROC curves 501 and 502 show that the performance of the CLD D0 scheme is better than the D-GPDI scheme according to the present invention, the performances of the CLD D0 scheme and the D-GPDI scheme are about same below about $10^{-5}$ of the false alarm probability, which is major performance factor in a typical receiver.

Fig. 6 is a graph comparing mean acquisition times of correlators of different frame synchronization types. In Fig. 6, a curve 601 denotes the mean acquisition time for a DPDI scheme, a curve 602 denotes the mean acquisition time for a GPDI scheme, a curve 603 denotes the mean acquisition time for a D-GPDI scheme according to the present embodiment, and a curve 604 denotes the mean acquisition time for a CLD L0 scheme.

As shown in Fig. 6, the curves 603 and 604 clearly show that the D-GPDI scheme according to the present

# EP 2 074 736 B1

embodiment is about similar to the CLD L0 scheme in the mean acquisition time. A penalty time ($T_P$) of the false alarm generation for inducing the mean acquisition time is set to one frame time ($T_F$) in Fig. 6.

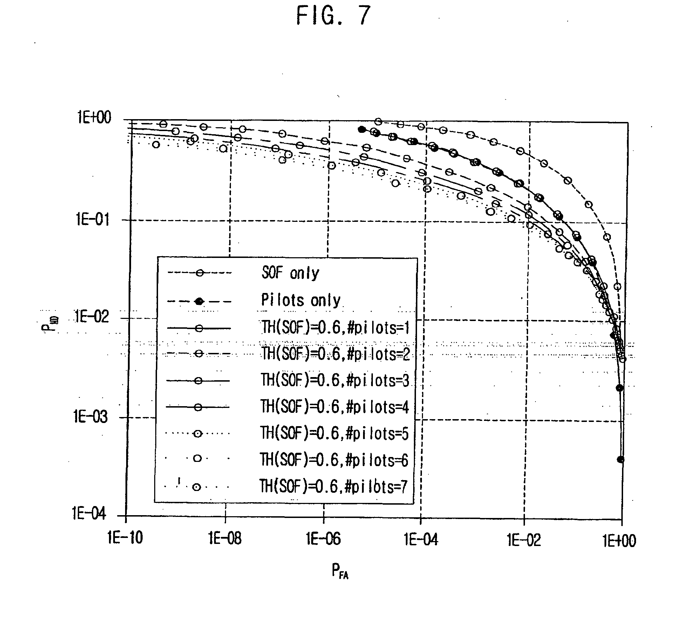

Fig. 7 is a graph showing the accuracies of frame synchronization according to the number of pilot symbols in a hot start state in accordance with an embodiment of the present invention. The graph of Fig. 7 shows that the correlator according to the present embodiment improves the reliability of frame synchronization by performing hard combining using a pilot symbol in a hot start state. The accuracy of the frame synchronization increases as the number of pilots increases.

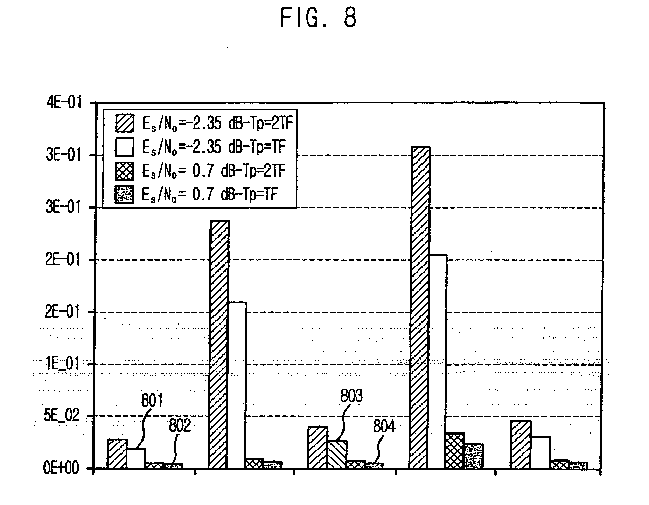

Fig. 8 is a graph for comparing mean acquisition times according to various Es/No by a penalty time. In Fig. 8, bars 801 and 802 for the CLD L0 scheme and bars 803 and 804 of the D-GPDI scheme clearly show that the CLD L0 scheme and the D-GPDI scheme according to the present embodiment have superior performance regardless of the penalty time ($T_P$).

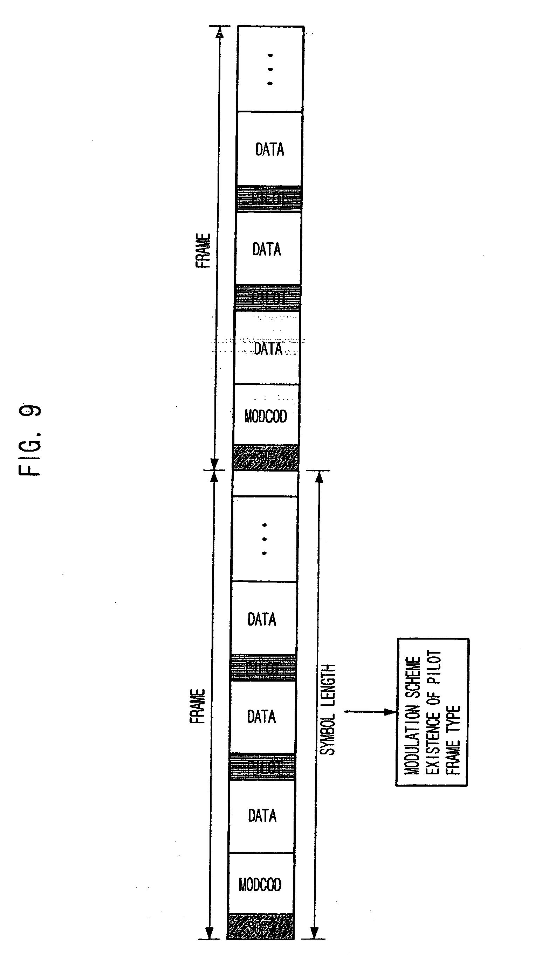

Fig. 9 is a diagram for describing a method of obtaining information about a modulation type, pilot existence, and a frame type through a frame symbol length after frame synchronization in accordance with an embodiment of the present invention.

Referring to Fig. 9, the frame data obtainer 26 detects information about a modulation type, pilot existence, and a frame type or a frame length through a frame symbol length which is obtained by the cold start detection after the cold start detection is performed for initial frame synchronization.

In the present embodiment, carrier synchronization can be easily performed by temporally detecting a frame structure through the frame synchronization before physical layer signaling code detection.

Fig. 10 is a table for describing relations between a frame symbol length and a transmission frame structure, which are applied to the present invention. The table shows a transmission frame structure used to obtain a modulation type, information whether a pilot exist or not, and a frame type or a frame length through a frame symbol length after the initial frame synchronization.

Fig. 11 is a flowchart for a method of obtaining frame data, which is applied to a frame data obtaining unit of Fig. 2, in accordance with an embodiment of the present invention. The frame data obtainer 26 extracts information about a modulation type, the existence of a pilot, and a frame type using the method of obtaining frame data shown in Fig. 11.

While an initial frame synchronization is performed through the cold start detector 21 and the first comparator 22, the frame data obtainer 26 stores the time information of correlation points where the decision variable outputted from the cold start detector 21 is larger than the first threshold value in a register at step S1100.

Then, the frame data obtainer 26 calculates a time difference between two correlation points in a time-series type at step S1101 and determines whether the table of Fig. 10 includes a frame symbol duration matched with the calculated time difference at step S1103.

If the table of Fig. 10 includes no frame symbol duration matched with the calculated time difference, the step S1101 is performed again. If the table of Fig. 10 includes frame symbol duration matched with the calculated time difference, the frame data obtainer 26 determines whether a count value is larger than a third threshold value or not at step S 1104.

If the count value is not larger than the third threshold value, the frame data obtainer 26 increase the count value by 1 at step S1105 and the step S1101 is performed again. The third threshold value is decided by an operator. If the operator decides a large third threshold value, the reliability of obtaining frame data increases. On the contrary, if the operator decides a small third threshold, the reliability of obtaining the frame data decreases. The time of acquiring the frame synchronizing decreases.

As the result of the step S 1104, if the count value is larger than the third threshold, the frame data obtainer 26 obtains the information about modulation type, frame length and pilot existence through a frame symbol duration matched in the step S1103. That is, a transmission frame type having a frame symbol duration matched with the time difference calculated at step S1101 is searched from the relation between the frame symbol length and the transmission frame structure, and information about modulation type, frame type and pilot existence is obtained from the structure information for the search transmission frame type.

The above described method according to the present invention can be embodied as a program and stored on a computer readable recording medium. The computer readable recording medium is any data storage device that can store data which can be thereafter read by the computer system. The computer readable recording medium includes a read-only memory (ROM), a random-access memory (RAM), a CD-ROM, a floppy disk, a hard disk and an optical magnetic disk.

While the present invention has been described with respect to certain preferred embodiments, it will be apparent to those skilled in the art that various changes and modifications may be made without departing from the scope of the invention as defined in the following claims.

**Claims**

1. An apparatus for frame synchronization using differential phase information in a digital video broadcasting (DVB) transmission system, comprising:

   a first correlation means for calculating a first decision variable as correlation using differential phase information between a received symbol data sequence and start of frame (SOF) symbol sequences for frame synchronization in a SOF symbol duration;
   a first comparison means for comparing the first decision variable with a predetermined first threshold value; and
   an acquisition controlling means for determining whether initial frame synchronization is achieved or not according to the comparison result of the first comparison means and controlling the first correlation means to continuously operate until the initial frame synchronization is achieved;
   **characterised by**
   a second correlation means for calculating a second decision variable as correlation using differential phase information between a received symbol data sequence and a pilot symbol sequence if the acquisition controlling means determines that the initial frame synchronization is achieved; and
   a second comparison means for comparing the second decision variable with a second threshold value,
   wherein the acquisition controlling means determines whether frame synchronization is sustained or not based on the comparison result of the second comparison means and controls the first correlation means to operate again if the frame synchronization is not sustained.

2. The apparatus of claim 1, wherein the second threshold value is larger than the first threshold value.

3. The apparatus of claim 1, further comprising a frame data obtaining means for obtaining information about a modulation type, a frame type, and pilot existence from structural information of the obtained transmission frame through the initial frame synchronization if the initial frame synchronization is achieved in the first comparison means.

4. The apparatus of claim 3, wherein the first correlation means includes:

   a first multiplying means for multiplying the received symbol data sequence with the start of frame (SOF) symbol sequence for frame synchronization;
   a first accumulation means for accumulating the multiplying results of the first multiplying means as much as a predetermined length;
   a plurality of symbol delay means for delaying the accumulated value of the first accumulation means as much as different symbol durations;
   a plurality of conjugate complex means for calculating conjugate complex number for the delayed symbol of each symbol delay means;
   a second multiplying means for multiplying the output value of the first accumulation means with an output value of each conjugate complex manes;
   a second accumulation means for calculating complex correlation by accumulating the output values of the second multiplying means as much as difference between a SOF length and the number of delayed symbols;
   an absolute calculation means for calculating an absolute value of the complex correlation; and
   a third multiplying means for controlling the correlation.

5. The apparatus of claim 3, wherein the second correlation means includes:

   a first multiplying means for multiplying the received symbol data sequence with the pilot symbols;
   a first accumulation means for accumulating the multiplying results of the second multiplying means as much as a predetermined length;
   a plurality of symbol delay means for delaying the accumulated value of the first accumulation means as much as different symbol durations;
   a plurality of conjugate complex means for calculating conjugate complex number for the delayed symbols of each symbol delay means;
   a second multiplying means for multiplying the output value of the first accumulation means with an output value of each conjugate complex manes;
   a second accumulation means for calculating complex correlation by accumulating the output values of the second multiplying means as much as difference between a pilot length and the number of delayed symbols;
   an absolute calculation means for calculating an absolute value of the complex correlation; and

a third multiplying means for controlling the correlation.

**6.** The apparatus of claim 3, wherein the frame data obtaining means stores time information of correlation points where the first decision variables are larger than the first threshold value larger among the first decision variables calculated through the first correlation means, calculates a time difference between two correlation points where the first decision variable is larger than the first threshold value in a predetermined time using the time information, and obtains information about a modulation type, a frame type, and pilot existence by analyzing a structure of a transmission frame using the calculated time difference.

**7.** The apparatus of claim 6, wherein the frame data obtaining means searches a type of a transmission frame having a frame symbol duration matched with the calculated time difference between the correlation points from relation of a frame symbol length and a transmission frame structure, and obtains information about a modulation type, a frame type, and pilot existence from structural information of the searched transmission frame type.

**8.** A method for frame synchronization using differential phase information in a digital video broadcasting (DVB) transmission system, comprising the steps of:

a) calculating a first decision variable as correlation using differential phase information between a received symbol data sequence and start of frame (SOF) symbol sequences for frame synchronization in a SOF symbol duration; and
b) determining whether initial frame synchronization is achieved or not by comparing the first decision variable with a predetermined first threshold value;
**characterised by**
c) calculating a second decision variable as correlation using differential phase information between a received symbol data sequence and a pilot symbol sequence if it is determined that the initial frame synchronization is achieved at the step a); and
d) determining whether frame synchronization is sustained or not by comparing the second decision variable with a second threshold value, and feeding the determination result back to the step a).

**9.** The method of claim 8, wherein the second threshold value is larger than the first threshold value.

**10.** The method of claim 7, further comprising the step of e) obtaining information about a modulation type, a frame type, and pilot existence from structural information of the obtained transmission frame through the initial frame synchronization if the initial frame synchronization is achieved at step b).

**11.** The method of claim 10, wherein the step a) includes the steps of:

a-1) multiplying the received symbol data sequence with the SOF symbol sequence for frame synchronization;
a-2) accumulating the multiplying results of the first multiplying means as long as a predetermined length;
a-3) generating a plurality of delayed accumulating values by individually delaying the accumulated values as much as different symbol durations;
a-4) calculating conjugate complex numbers for each of the accumulated values delayed at the step a-3);
a-5) multiplying the accumulated value of the step a-2) with each of the calculated conjugate complex numbers;
a-6) calculating complex correlation by accumulating the multiplying results of the step a-4) as much as the difference between a total SOF length and the number of delayed symbols;
a-7) calculating a correlation size by calculating an absolute value of the complex correlation; and
a-8) controlling a size by multiplying the correlation size with a predetermined gain value.

**12.** The method of claim 10, wherein the step c) includes the steps of:

c-1) multiplying the received symbol data sequence with the pilot symbol sequence;
c-2) accumulating the multiplying results of the step c-1) as long as a predetermined length;
c-3) generating a plurality of delayed accumulated values by delaying the accumulated values of the step c-2) individually as much as different symbol durations;
c-4) calculating conjugate complex numbers for each of the accumulated values delayed at the step c-3);
c-5) multiplying the accumulated value of the step c-2) with each of the calculated conjugated complex values;
c-6) calculating complex correlation by accumulating the multiplying results of the step c-5) as much as a difference between a total pilot length and the number of delayed symbols;

c-7) calculating a correlation size by calculating an absolute value of the complex correlation; and

c-8) controlling a size by multiplying the correlation size with a predetermined gain value.

**13.** The method of claim 10, wherein the step e) includes the steps of:

e-1) storing time information of correlation points where first decision variables are larger than the first threshold value among the first decision variables obtained through the step a);

e-2) calculating a time difference between two correlation points where first decision variables are larger than the first threshold value using the stored time information; and

e-3) obtaining information about a modulation type, a frame type, and pilot existence by detecting a structure of a transmission frame using the time difference between the correlation points.

**14.** The method of claim 13, wherein the in the step e), wherein a type of a transmission frame having a frame symbol duration matched with the time difference between the correlation points is searched from relation between a frame symbol length and a transmission frame structure, and information about a modulation type, a frame type, and pilot existence is obtained from structural information for the searched transmission frame type.


**Patentansprüche**

**1.** Vorrichtung zur Rahmensynchronisation unter Verwendung differentieller Phaseninformationen in einem Übertragungssystem für digitalen Videorundfunk (DVB-Übertragungssystem), die umfasst:

ein erstes Korrelationsmittel zum Berechnen einer ersten Entscheidungsvariable als Korrelation unter Verwendung differentieller Phaseninformationen zwischen einer empfangenen Symboldatenfolge und Rahmenbeginn-Symbolfolgen (SOF-Symbolfolgen) zur Rahmensynchronisation während einer SOF-Symboldauer;

ein erstes Vergleichsmittel zum Vergleichen der ersten Entscheidungsvariable mit einem vorgegebenen ersten Schwellenwert; und

ein Erfassungssteuermittel zum Bestimmen, ob eine anfängliche Rahmensynchronisation erzielt wird oder nicht, in Übereinstimmung mit dem Vergleichsergebnis des ersten Vergleichsmittels und zum Steuern des ersten Korrelationsmittels, um ununterbrochen zu arbeiten, bis die anfängliche Rahmensynchronisation erzielt wird; **gekennzeichnet durch**

ein zweites Korrelationsmittel zum Berechnen einer zweiten Entscheidungsvariable als Korrelation unter Verwendung differentieller Phaseninformationen zwischen einer empfangenen Symboldatenfolge und eine Pilotsymbolfolge, falls das Erfassungssteuermittel bestimmt, dass die anfängliche Rahmensynchronisation erzielt wird; und

ein zweites Vergleichsmittel zum Vergleichen der zweiten Entscheidungsvariable mit einem zweiten Schwellenwert,

wobei das Erfassungssteuermittel anhand des Vergleichsergebnisses des zweiten Vergleichsmittels bestimmt, ob eine Rahmensynchronisation aufrecht erhalten wird oder nicht, und das erste Korrelationsmittel steuert, damit es erneut arbeitet, falls die Rahmensynchronisation nicht aufrecht erhalten wird.

**2.** Vorrichtung nach Anspruch 1, wobei der zweite Schwellenwert größer als der erste Schwellenwert ist.

**3.** Vorrichtung nach Anspruch 1, die ferner ein Rahmendaten-Erhaltemittel zum Erhalten von Informationen über einen Modulationstyp, einen Rahmentyp und eine Pilotexistenz aus Strukturinformationen des erhaltenen Senderahmens durch die anfängliche Rahmensynchronisation, falls die anfängliche Rahmensynchronisation in dem ersten Vergleichsmittel erzielt wird, umfasst.

**4.** Vorrichtung nach Anspruch 3, wobei das erste Korrelationsmittel umfasst:

ein erstes Multiplikationsmittel zum Multiplizieren der empfangenen Symboldatenfolge mit der Rahmenbeginn-Symbolfolge (SOF-Symbolfolge) für die Rahmensynchronisation;

ein erstes Akkumulationsmittel zum Akkumulieren der Multiplikationsergebnisse des ersten Multiplikationsmittels in einem einer vorgegebenen Länge entsprechende Umfang;

mehrere Symbolverzögerungsmittel zum Verzögern des akkumulierten Werts des ersten Akkumulationsmittels in einem verschiedenen Symboldauern entsprechenden Umfang;

mehrere Komplexkonjugationsmittel zum Berechnen einer komplex konjugierten Zahl für das verzögerte Symbol jedes Symbolverzögerungsmittels;

ein zweites Multiplikationsmittel zum Multiplizieren des Ausgangswerts des ersten Akkumulationsmittels mit einem Ausgangswert jedes Komplexkonjugationsmittels;

ein zweites Akkumulationsmittel zum Berechnen einer komplexen Korrelation durch Akkumulieren der Ausgangswerte des zweiten Multiplikationsmittels in einem der Differenz zwischen einer SOF-Länge und der Anzahl verzögerter Symbole entsprechenden Umfang;

ein Absolutberechnungsmittel zum Berechnen eines Absolutwerts der komplexen Korrelation; und

ein drittes Multiplikationsmittel zum Steuern der Korrelation.

5. Vorrichtung nach Anspruch 3, wobei das zweite Korrelationsmittel umfasst:

ein erstes Multiplikationsmittel zum Multiplizieren der empfangenen Symboldatenfolge mit den Pilotsymbolen;

ein erstes Akkumulationsmittel zum Akkumulieren der Multiplikationsergebnisse des zweiten Multiplikationsmittels in einem einer vorgegebenen Länge entsprechenden Umfang;

mehrere Symbolverzögerungsmittel zum Verzögern des akkumulierten Werts des ersten Akkumulationsmittels in einem unterschiedlichen Symboldauern entsprechenden Umfang;

mehrere Komplexkonjugationsmittel zum Berechnen einer komplex konjugierten Zahl für die verzögerten Symbole jedes Symbolverzögerungsmittels;

ein zweites Multiplikationsmittel zum Multiplizieren des Ausgangswerts des ersten Akkumulationsmittels mit einem Ausgangswert jedes Komplexkonjugationsmittels;

ein zweites Akkumulationsmittel zum Berechnen einer komplexen Korrelation durch Akkumulieren der Ausgangswerte des zweiten Multiplikationsmittels in einem einer Differenz zwischen einer Pilotlänge und der Anzahl verzögerter Symbole entsprechenden Umfang;

ein Absolutberechnungsmittel zum Berechnen eines Absolutwerts der komplexen Korrelation; und

ein drittes Multiplikationsmittel zum Steuern der Korrelation.

6. Vorrichtung nach Anspruch 3, wobei das Rahmendaten-Erhaltemittel Zeitinformationen von Korrelationspunkten speichert, an denen die ersten Entscheidungsvariablen unter den durch das erste Korrelationsmittel berechneten ersten Entscheidungsvariablen größer sind als der erste Schwellenwert, eine Zeitdifferenz zwischen zwei Korrelationspunkten, an denen die erste Entscheidungsvariable größer ist als der erste Schwellenwert, in einer vorgegebenen Zeit unter Verwendung der Zeitinformationen berechnet und Informationen über einen Modulationstyp, einen Rahmentyp und eine Pilotexistenz durch Analysieren einer Struktur eines Senderahmens unter Verwendung der berechneten Zeitdifferenz erhält.

7. Vorrichtung nach Anspruch 6, wobei das Rahmendaten-Erhaltemittel anhand einer Beziehung einer Rahmensymbollänge und einer Senderahmenstruktur nach einem Typ eines Senderahmens sucht, der eine Rahmensymboldauer besitzt, die an die berechnete Zeitdifferenz zwischen den Korrelationspunkten angepasst ist, und Informationen über einen Modulationstyp, einen Rahmentyp und eine Pilotexistenz aus Strukturinformationen des gesuchten Senderahmentyps erhält.

8. Verfahren zur Rahmensynchronisation unter Verwendung differentieller Phaseninformationen in einem Übertragungssystem für digitalen Videorundfunk (DVB-Übertragungssystem), das die folgenden Schritte umfasst:

a) Berechnen einer ersten Entscheidungsvariable als Korrelation unter Verwendung differentieller Phaseninformationen zwischen einer empfangenen Symboldatenfolge und Rahmenbeginn-Symbolfolgen (SOF-Symbolfolgen) für die Rahmensynchronisation in einer SOF-Symboldauer; und

b) Bestimmen, ob die anfängliche Rahmensynchronisation erzielt wird oder nicht, durch Vergleichen der ersten Entscheidungsvariable mit einem vorgegebenen ersten Schwellenwert;

**gekennzeichnet durch**

c) Berechnen einer zweiten Entscheidungsvariable als Korrelation unter Verwendung differentieller Phaseninformationen zwischen einer empfangenen Symboldatenfolge und einer Pilotsymbolfolge, falls im Schritt a) bestimmt wird, dass die anfängliche Rahmensynchronisation erzielt wird; und

d) Bestimmen, ob die Rahmensynchronisation aufrecht erhalten wird oder nicht, **durch** Vergleichen der zweiten Entscheidungsvariable mit einem zweiten Schwellenwert und **durch** Rückmelden des Bestimmungsergebnisses zum Schritt a).

9. Verfahren nach Anspruch 8, wobei der zweite Schwellenwert größer als der erste Schwellenwert ist.

**10.** Verfahren nach Anspruch 7, das ferner den Schritt e) des Erhaltens von Informationen über einen Modulationstyp, einen Rahmentyp und eine Pilotexistenz aus Strukturinformationen des erhaltenen Senderahmens durch die anfängliche Rahmensynchronisation, falls die anfängliche Rahmensynchronisation im Schritt b) erzielt wird, umfasst.

**11.** Verfahren nach Anspruch 10, wobei der Schritt a) die folgenden Schritte umfasst:

a-1) Multiplizieren der empfangenen Symboldatenfolge mit der SOF-Symbolfolge für die Rahmensynchronisation;
a-2) Akkumulieren der Multiplikationsergebnisse des ersten Multiplikationsmittels in einem einer vorgegebenen Länge entsprechenden Umfang;
a-3) Erzeugen mehrerer verzögerter Akkumulationswerte durch individuelles Verzögern der akkumulierten Werte in einem verschiedene Symboldaten entsprechenden Umfang;
a-4) Berechnen komplex konjugierter Zahlen für jeden der akkumulierten Werte, die im Schritt a-3) verzögert werden;
a-5) Multiplizieren des akkumulierten Werts des Schrittes a-2) mit jeder der berechneten komplex konjugierten Zahlen;
a-6) Berechnen einer komplexen Korrelation durch Akkumulieren der Multiplikationsergebnisse des Schrittes a-4) in einem der Differenz zwischen einer Gesamt-SOF-Länge und der Anzahl verzögerter Symbole entsprechenden Umfang;
a-7) Berechnen einer Korrelationsgröße durch Berechnen eines Absolutwerts der komplexen Korrelation; und
a-8) Steuern einer Größe durch Multiplizieren der Korrelationsgröße mit einem vorgegebenen Verstärkungswert.

**12.** Verfahren nach Anspruch 10, wobei der Schritt c) die folgenden Schritte umfasst:

c-1) Multiplizieren der empfangenen Symboldatenfolge mit der Pilotsymbolfolge;
c-2) Akkumulieren der Multiplikationsergebnisse des Schrittes c-1) in einem einer vorgegebenen Länge entsprechenden Umfang;
c-3) Erzeugen mehrerer verzögerter akkumulierter Werte durch individuelles Verzögern der akkumulierten Werte des Schrittes c-2) in einem verschiedenen Symboldauern entsprechenden Umfang;
c-4) Berechnen komplex konjugierter Zahlen für jeden der im Schritt c-3) verzögerten akkumulierten Werte;
c-5) Multiplizieren des akkumulierten Werts des Schrittes c-2) mit den berechneten komplex konjugierten Werten;
c-6) Berechnen einer komplexen Korrelation durch Akkumulieren der Multiplikationsergebnisse des Schrittes c-5) in einem einer Differenz zwischen der Gesamtpilotlänge und der Anzahl verzögerter Symbole entsprechenden Umfang;
c-7) Berechnen einer Korrelationsgröße durch Berechnen eines Absolutwerts der komplexen Korrelation; und
c-8) Steuern einer Größe durch Multiplizieren der Korrelationsgröße mit einem vorgegebenen Verstärkungswert.

**13.** Verfahren nach Anspruch 10, wobei der Schritt e) die folgenden Schritte umfasst:

e-1) Speichern von Zeitinformationen von Korrelationspunkten, an denen erste Entscheidungsvariablen unter den ersten Entscheidungsvariablen, die durch den Schritt a) erhalten werden, größer sind als der erste Schwellenwert;
e-2) Berechnen einer Zeitdifferenz zwischen zwei Korrelationspunkten, an denen erste Entscheidungsvariablen größer sind als der erste Schwellenwert, unter Verwendung der gespeicherten Zeitinformationen; und
e-3) Erhalten von Informationen über einen Modulationstyp, einen Rahmentyp und eine Pilotexistenz durch Detektieren einer Struktur eines Senderahmens unter Verwendung der Zeitdifferenz zwischen den Korrelationspunkten.

**14.** Verfahren nach Anspruch 13, wobei in dem Schritt e) ein Typ eines Senderahmens mit einer Rahmensymboldauer, die an die Zeitdifferenz zwischen den Korrelationspunkten angepasst ist, aus einer Beziehung zwischen einer Rahmensymbollänge und einer Senderahmenstruktur gesucht wird und Informationen über einen Modulationstyp, einen Rahmentyp und eine Pilotexistenz aus Strukturinformationen für den gesuchten Senderahmentyp erhalten werden.

**Revendications**

1. Appareil pour la synchronisation de trame utilisant des informations de phase différentielle dans un système de transmission de diffusion vidéo numérique (DVB), comprenant :

   un premier moyen de corrélation pour calculer une première variable de décision en tant que corrélation en utilisant des informations de phase différentielle entre une séquence de données de symbole reçue et des séquences de symboles de début de trame (SOF) pour la synchronisation de trame dans une durée de symbole SOF ;
   un premier moyen de comparaison pour comparer la première variable de décision avec une première valeur de seuil prédéterminée ; et
   un moyen de commande d'acquisition pour déterminer si une synchronisation de trame initiale est réalisée ou non en fonction du résultat de comparaison du premier moyen de comparaison et commander le premier moyen de corrélation pour fonctionner en continu jusqu'à ce que la synchronisation de trame initiale soit réalisé ;
   **caractérisé par**
   un second moyen de corrélation pour calculer une seconde variable de décision en tant que corrélation en utilisant des informations de phase différentielle entre une séquence de données de symbole reçue et une séquence de symboles pilotes si le moyen de commande d'acquisition détermine que la synchronisation de trame initiale est réalisée ; et
   un second moyen de comparaison pour comparer la seconde variable de décision avec une seconde valeur de seuil,
   dans lequel le moyen de commande d'acquisition détermine si la synchronisation de trame est maintenue ou non sur la base du résultat de comparaison du second moyen de comparaison et commande le premier moyen de corrélation pour fonctionner à nouveau si la synchronisation de trame n'est pas maintenue.

2. Appareil selon la revendication 1, dans lequel la seconde valeur de seuil est plus grande que la première valeur de seuil.

3. Appareil selon la revendication 1, comprenant en outre un moyen d'obtention de données de trame pour obtenir des informations sur un type de modulation, un type de trame, et l'existence de pilote à partir d'informations structurelles de la trame de transmission obtenue par l'intermédiaire de la synchronisation de trame initiale si la synchronisation de trame initiale est réalisée dans le premier moyen de comparaison.

4. Appareil selon la revendication 3, dans lequel le premier moyen de corrélation comprend :

   un premier moyen de multiplication pour multiplier la séquence de données de symbole reçue avec la séquence de symboles de début de trame (SOF) pour la synchronisation de trame ;
   un premier moyen d'accumulation pour accumuler les résultats de multiplication du premier moyen de multiplication autant qu'une longueur prédéterminée ;
   une pluralité de moyens de retard de symbole pour retarder la valeur accumulée du premier moyen d'accumulation autant que des durées de symbole différentes ;
   une pluralité de moyens complexes conjugués pour calculer un nombre complexe conjugué pour le symbole retardé de chaque moyen de retard de symbole ;
   un deuxième moyen de multiplication pour multiplier la valeur de sortie du premier moyen d'accumulation avec une valeur de sortie de chaque moyen complexe conjugué ;
   un second moyen d'accumulation pour calculer une corrélation complexe en accumulant les valeurs de sortie du deuxième moyen de multiplication autant que la différence entre une longueur SOF et le nombre de symboles retardés ;
   un moyen de calcul absolu pour calculer une valeur absolue de la corrélation complexe ; et
   un troisième moyen de multiplication pour commander la corrélation.

5. Appareil selon la revendication 3, dans lequel le second moyen de corrélation comprend :

   un premier moyen de multiplication pour multiplier la séquence de données de symbole reçue avec les symboles pilotes ;
   un premier moyen d'accumulation pour accumuler les résultats de multiplication du deuxième moyen de multiplication autant qu'une longueur prédéterminée ;
   une pluralité de moyens de retard de symbole pour retarder la valeur accumulée du premier moyen d'accumulation autant que des durées de symbole différentes ;

une pluralité de moyens complexes conjugués pour calculer un nombre complexe conjugué pour les symboles retardés de chaque moyen de retard de symbole ;

un deuxième moyen de multiplication pour multiplier la valeur de sortie du premier moyen d'accumulation avec une valeur de sortie de chaque moyen complexe conjugué ;

un second moyen d'accumulation pour calculer une corrélation complexe en accumulant les valeurs de sortie du deuxième moyen de multiplication autant que la différence entre une longueur de pilote et le nombre de symboles retardés ;

un moyen de calcul absolu pour calculer une valeur absolue de la corrélation complexe ; et

un troisième moyen de multiplication pour commander la corrélation.

6. Appareil selon la revendication 3, dans lequel le moyen d'obtention de données de trame stocke des informations de temps de points de corrélation où les premières variables de décision sont plus grandes que la première valeur de seuil parmi les premières variables de décision calculées par l'intermédiaire du premier moyen de corrélation, calcule une différence de temps entre deux points de corrélation où la première variable de décision est plus grande que la première valeur de seuil dans un temps prédéterminé en utilisant les informations de temps, et obtient des informations sur un type de modulation, un type de trame, et l'existence de pilote en analysant une structure d'une trame de transmission en utilisant la différence de temps calculée.

7. Appareil selon la revendication 6, dans lequel le moyen d'obtention de données de trame recherche un type d'une trame de transmission ayant une durée de symbole de trame adaptée à la différence de temps calculée entre les points de corrélation à partir d'une relation d'une longueur de symbole de trame et d'une structure de trame de transmission, et obtient des informations sur un type de modulation, un type de trame, et l'existence de pilote à partir d'informations structurelles du type de trame de transmission recherché.

8. Procédé pour la synchronisation de trame utilisant des informations de phase différentielle dans un système de transmission de diffusion vidéo numérique (DVB), comprenant les étapes consistant à :

a) calculer une première variable de décision en tant que corrélation en utilisant des informations de phase différentielle entre une séquence de données de symbole reçue et des séquences de symboles de début de trame (SOF) pour la synchronisation de trame dans une durée de symbole SOF ; et

b) déterminer si une synchronisation de trame initiale est réalisée ou non en comparant la première variable de décision avec une première valeur de seuil prédéterminée ;

**caractérisé par**

c) le calcul d'une seconde variable de décision en tant que corrélation en utilisant des informations de phase différentielle entre une séquence de données de symbole reçue et une séquence de symboles pilotes s'il est déterminé que la synchronisation de trame initiale est réalisée à l'étape a) ; et

d) la détermination de si la synchronisation de trame est maintenue ou non en comparant la seconde variable de décision avec une seconde valeur de seuil, et le fait de réinjecter le résultat de détermination à l'étape a).

9. Procédé selon la revendication 8, dans lequel la seconde valeur de seuil est plus grande que la première valeur de seuil.

10. Procédé selon la revendication 7, comprenant en outre l'étape e) consistant à obtenir des informations sur un type de modulation, un type de trame, et l'existence de pilote à partir d'informations structurelles de la trame de transmission obtenue par l'intermédiaire de la synchronisation de trame initiale si la synchronisation de trame initiale est réalisée à l'étape b).

11. Procédé selon la revendication 10, dans lequel l'étape a) comprend les étapes consistant à :

a-1) multiplier la séquence de données de symbole reçue avec la séquence de symboles SOF pour la synchronisation de trame ;

a-2) accumuler les résultats de multiplication du premier moyen de multiplication autant qu'une longueur prédéterminée ;

a-3) générer une pluralité de valeurs d'accumulation retardées en retardant individuellement les valeurs accumulées autant que des durées de symbole différentes ;

a-4) calculer des nombres complexes conjugués pour chacune des valeurs accumulées retardées à l'étape a-3) ;

a-5) multiplier la valeur accumulée de l'étape a-2) avec chacun des nombres complexes conjugués calculés ;

a-6) calculer une corrélation complexe en accumulant les résultats de multiplication de l'étape a-4) autant que la différence entre une longueur SOF totale et le nombre de symboles retardés ;

a-7) calculer une taille de corrélation en calculant une valeur absolue de la corrélation complexe ; et

a-8) commander une taille en multipliant la taille de corrélation avec une valeur de gain prédéterminée.

12. Procédé selon la revendication 10, dans lequel l'étape c) comprend les étapes consistant à :

c-1) multiplier la séquence de données de symbole reçue avec la séquence de symboles pilotes ;

c-2) accumuler les résultats de multiplication de l'étape c-1) autant qu'une longueur prédéterminée ;

c-3) générer une pluralité de valeurs accumulées retardées en retardant les valeurs accumulées de l'étape c-2) individuellement autant que des durées de symbole différentes ;

c-4) calculer des nombres complexes conjugués pour chacune des valeurs accumulées retardées à l'étape c-3) ;

c-5) multiplier la valeur accumulée de l'étape c-2) avec chacune des valeurs complexes conjuguées calculées ;

c-6) calculer une corrélation complexe en accumulant les résultats de multiplication de l'étape c-5) autant qu'une différence entre une longueur de pilote totale et le nombre de symboles retardés ;

c-7) calculer une taille de corrélation en calculant une valeur absolue de la corrélation complexe ; et

c-8) commander une taille en multipliant la taille de corrélation avec une valeur de gain prédéterminée.

13. Procédé selon la revendication 10, dans lequel l'étape e) comprend les étapes consistant à :

e-1) stocker des informations de temps de points de corrélation où des premières variables de décision sont plus grandes que la première valeur de seuil parmi les premières variables de décision obtenues par l'intermédiaire de l'étape a) ;

e-2) calculer une différence de temps entre deux points de corrélation où des premières variables de décision sont plus grandes que la première valeur de seuil en utilisant les informations de temps stockées ; et

e-3) obtenir des informations sur un type de modulation, un type de trame, et l'existence de pilote en détectant une structure d'une trame de transmission en utilisant la différence de temps entre les points de corrélation.

14. Procédé selon la revendication 13, dans lequel à l'étape e), un type d'une trame de transmission ayant une durée de symbole de trame adaptée à la différence de temps entre les points de corrélation est recherchée à partir d'une relation entre une longueur de symbole de trame et une structure de trame de transmission, et des informations sur un type de modulation, un type de trame, et l'existence de pilote sont obtenues à partir d'informations structurelles pour le type de trame de transmission recherché.

FIG. 1

# FIG. 2

RECEIVING
SYMBOL DATA → COLD START DETECTOR `21` → FIRST COMPARATOR `22`

FRAME DATA OBTAINER `26`

ACQUISITION CONTROLLER `23`

WHEN ACQUIRED → HOT START DETECTOR `24` → SECOND COMPARATOR `25`

# FIG. 3

COMPLEX
RECEIVING SIGNAL

300 MATCHED FILTER

301 SYMBOL TIMING RESTORING UNIT

303

304 $\sum\limits^{M}$

307

308 $\sum\limits^{L_n}$

309 $|\ |$

310

DECISION VARIABLE

302 SEQUENCE GENERATOR

305 T ⋮ nT

306 $(\cdot)^*$ ⋮ $(\cdot)^*$

2

30 CORRELATOR

EP 2 074 736 B1

## FIG. 4

## FIG. 5

FIG. 6

FIG. 7

FIG. 8

FIG. 9

FRAME

FRAME

SYMBOL LENGTH

MODULATION SCHEME
EXISTENCE OF PILOT
FRAME TYPE

# FIG. 10

| MODULATION SCHEME | | THE NUMBER OF SYMBOLS PER FRAME (64800BIT/FRAME) | THE NUMBER OF PILOTS PER FRAME (64800BIT/FRAME) | THE NUMBER OF SYMBOLS PER FRAME (16200BIT/FRAME) | THE NUMBER OF PILOTS PER FRAME (16200BIT/FRAME) |
|---|---|---|---|---|---|
| QPSK | pilot | 33282 (90+360x90+22x36) | 22 | 8370 (90+90x90+5x36) | 5 |
| | Non_pilot | 32490 (90+360x90) | X | 8190 (90+90x90) | X |
| 8PSK | pilot | 00194 (90+240x90+14x36) | 14 | 5598 (90+60x90+3x36) | 3 |
| | Non_pilot | 21690 (90+240x90) | X | 5580 (90+60x90) | X |
| 16APSK | pilot | 16686 (90+180x90+11x36) | 11 | 4212 (90+45x90+2x36) | 2 |
| | Non_pilot | 16290 (90+180x90) | X | 4140 (90+45x90) | X |
| 32APSK | pilot | 13338(90+144x90+8x36) | 8 | 3402 (90+36x90+2x36) | 2 |
| | Non_pilot | 13050 (90+144x90) | X | 3330 (90+36x90) | X |

EP 2 074 736 B1

# FIG. 11

```
                              ┌─────────┐
                              │  START  │
                              └────┬────┘
                                   │
                                   ▼
            ┌──────────────────────────────────────────┐
            │  SYNCHRONIZE FRAMES THROUGH CORRELATOR     │
            │  (STORE TIME INFORMATION OF POINT WHERE    │─── S1100
            │   DECISION VARIABLE IS LARGER THAN         │
            │         FIRST THRESHOLD)                   │
            └──────────────────────┬───────────────────┘
                                   │
                                   ▼
            ┌──────────────────────────────────────────┐
            │  CALCULATE TIME DIFFERENCE BETWEEN TWO     │
            │  POINTS WHERE DECISION VARIABLE IS LARGER  │─── S1101
            │  THAN FIRST THRESHOLD AS TIME-SERIES       │
            └──────────────────────┬───────────────────┘
                                   │
   ┌──────────────────────┐ S1105  │        S1103
   │  INCREASE COUNT VALUE │       ╱▼╲
   └──────────┬───────────┘      ╱    ╲
              │               ╱  FIRST FRAME SYMBOL CYCLE  ╲   NO
              │              ⟨   IDENTICAL TO THE TIME DIFFERENCE IN ⟩──────┐
              │               ╲       TABLE OF FIG. 10?    ╱               │
              │                ╲                          ╱                │
              │                  ╲      │YES            ╱                  │
              │                         ▼                                  │
              │                 S1104                                      │
              │               ╱       ╲                                    │
              │ NO          ╱           ╲                                  │
              └───────────⟨  COUNT VALUE > THIRD THRESHOLD ⟩               │
                            ╲                           ╱                  │
                              ╲          │YES         ╱                    │
                                         ▼                                 │
            ┌──────────────────────────────────────────┐                  │
            │  OBTAIN INFORMATION ABOUT MODULATION SCHEME,│─── S1106         │
            │  FRAME LENGTH, AND EXISTENCE OF PILOT       │                  │
            └──────────────────────┬───────────────────┘                  │
                                   │                                       │
                                   ▼                                       │
                              ┌─────────┐                                  │
                              │   END   │                                  │
                              └─────────┘                                  │
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. W. SUN ; Y. JIANG ; L. N. LEE.** Frame Synchronization and Pilot Structure for Second Generation DVB via Satellite. *Int. J. Satell. Commun. Network,* May 2004, vol. 22, 319-339
- **Z.Y. CHOI ; Y.H. LEE.** Frame Synchronization in the Presence of Frequency Offset. *IEEE Trans on Commu.,* July 2002, vol. 50 (7), 1062-1065

- **G.E. CORAZZA ; R. PEDONE.** Generalized and Average Post Detection Integration Methods for Code Acquisition. *IEEE International Symposium on Spread Spectrum Techniques and Applications (ISSSTA04,* 30 August 2004
- **A. MORELLO ; V. MIGNONE.** DVB-S2: The Second Generation Standard for Satellite Broad-band Services. *Proceedings of the IEEE,* January 2006, vol. 94 (1